# EUROPEAN PATENT APPLICATION

(11) **EP 0 714 608 A1**
(43) Date of publication of application: **05.06.1996**
(21) Application number: 95203054.2
(22) Date of filing: 09.11.1995
(51) Int. Cl.: A23L 1/00, A23C 19/09, A23L 1/164

(54) **Process for preparing a snack product**

(30) Priority: 28.11.1994 EP 94308780
(71) Applicant: UNILEVER N.V., NL-3000 DK Rotterdam (NL); UNILEVER PLC, London EC4P 4BQ (GB)
(72) Inventor: van den Heuvel, Wilhelmus M.J.G., Unilever Res., NL-3133 AT Vlaardingen (NL); Povey, Kevin John, Hornchurch, Essex RM12 6NZ (GB)
(74) Representative: Rots, Maria Johanna Francisca

(57) **Abstract**

A process is provided for preparing an enrobed snack product having a fat-based enrobing and a water-continuous filling comprising:
A. mixing soft cheese and/or soft cheese analogue with food grade materials to obtain a filling mixture,
B. pasteurising the mixture,
C. subjecting the pasteurised mixture to cooling to below 10°C, extruding and separating into portions to obtain shaped portions of fillings,
D. enrobing the shaped portions of filling with a fluid fat based coating material,
wherein the filling has a water activity of 0.91-0.98 and a pH of 3.7-5.0, preferably 4.0-4.8.

The resulting products are physically and microbiologically stable for at least 3 weeks at refrigerated temperature. The snack product has favourable nutritional properties. The process is flexible and cost-effective.

## Description

The volume of snack products sold over the last decades has increased considerably and that is particularly true for sweet snack products.

These sweet snack products are usually enrobed in chocolate or another chocolate-like fat-based coating material, eg. bar products and bonbons or filled chocolates, and are usually high in sugar and fat content in order to make the filling shelf stable. However, due to an increased awareness of the importance of reducing fat and sugar intake in the diet important groups of consumers are asking for products which offer a more balanced calorie intake. Higher protein snacks incorporating nuts or peanuts in the filling do not fully meet the needs of these consumers due to the high calorific value of nuts and peanuts and the fact that the main filling remains high in saccharose and/or fat.

FR 2639796 describes a product comprising a portion of fromage frais coated with chocolate. In this way the publication aims to make the nutritional benefits of milk available to people with lactose intolerance and to people who do not like milk and salted, fermented cheese. The coating also protects the fresh cheese against oxidation and microbiological deterioration. Individual pieces of fresh cheese are produced in moulds. The pieces are demoulded and the surface is coated with sugar. The pieces are kept below 10°C for 24 hours in a conditioned room to obtain a dry matter content of at least 30%. Then the temperature is raised to 20° and the portions are enrobed e.g. with fluid chocolate. The products are cooled to 18° and packed.

This process is lengthy and requires extremely high hygienic standards. Because the fresh cheese must be prepared in moulds giving the shape to the centre pieces, large production areas are needed for a relatively small amount of product. The proposal of FR 2639796 is inflexible and leaves little room to adapt the resulting product properties to consumer preferences.

The invention aims at the provision of enrobed snack products, the filling thereof being relatively high in proteins as compared with that of usual sweet snack products and being light and creamy and notwithstanding that, the product being sufficiently stable, both microbiologically and physically stable at refrigerated temperatures of 3-8°C, to bridge a distribution period of at least 3 weeks, preferably at least 1 month. It aims at providing a process for preparing such products that is flexible, allowing a range of products with different properties to be prepared according to customers' wishes, and that is cost-effective.

Accordingly the invention provides a process for preparing an enrobed snack product having a fat-based enrobing and a water-continuous filling comprising:
A. mixing soft cheese and/or soft cheese analogue with food grade materials to obtain a filling mixture,
B. pasteurising the mixture,
C. subjecting the pasteurised mixture to cooling to below 10°C, extruding and separating into portions to obtain shaped portions of filling,
D. enrobing the shaped portions of filling with a fluid fat based coating material,
wherein the filling has a water activity of 0.91-0.98 and a pH of 3.7-5.0, preferably 4.0-4.8.
Preferred embodiments of the process are given in claims 2-10. The invention encompasses enrobed snack products obtainable by the process that are physically and microbiologically stable for at least 3 weeks, preferably at least 1 month at refrigerated temperatures, typically 5°C.

Preferably the filling mixture comprises all ingredients (other than gas) to be present homogeneously distributed in the filling of the end product, but if so desired part of the components to be present in the filling may also be incorporated at a later stage of the process, e.g. just before the extrusion. If so, care should be taken that the microbiological quality of the product is not adversely affected. The filling should have a water activity of 0.91-0.98 and a pH of 3.7-5.0, preferably 4.0-4.8. We found that under these conditions the best combination of processability, sensoric properties and keepability can be obtained. To facilitate process control, to have a simple process and to obtain good processability, preferably the filling mixture also has a water activity of 0.91-0.98 and a pH of 3.7-5.0, preferably 4.0-4.8.

The food grade materials with which the soft cheese and/or soft cheese analogue is mixed may comprise flavouring material, acidulants and usual additives and solutes, for example mono- and/or disaccharides e.g. glucose and saccharose, flavour cocktails, gums e.g. locust bean gum, food grade acids e.g. citric acid, salt, preservatives and the like. Water may be included in the filling mixture as well. Using such materials, the desired water activity and pH of the filling mixture and the ultimate filling are readily achieved.

The snack product may comprise fruit based ingredients such as fruit puree or paste, fruit particles in a preserved form, crunches, fat based particles, e.g. pieces of nuts and/or chocolate chips. These ingredients are left out of consideration when describing the properties of the filling mixture or the filling. These ingredients may be present as separate particles, homogeneously mixed in and as a layer or layers separate from the filling. Thus, such materials are conveniently introduced via the filling mixture if it is desired that they are present distributed through the filling. Alternatively they can be mixed in or incorporated otherwise prior to the extrusion. They can also be coextruded with the filling mixture into separate layers or sprinkled onto the extruded filling mixture prior to enrobing. Yet another possibility is to apply a layer of such material onto the extruded filling, e.g. from a separate nozzle or via gravity feeding. Other approaches for combining filling with such other material can be used as well.

Pasteurisation is preferably done at a temperature not exceeding that at which appreciable casein denaturation occurs. In practice pasteurisation will be at a temperature below 95°C and preferably between 65 and 85°C and in particular between 72 and 78°C for achieving good textures and a nice taste and mouth feel.

The cooling in step C of the process can be done prior to the extrusion, but part of the cooling can also be done after the extrusion and/or after separating the extruded strand into portions. In any case the portions that are enrobed should have a temperature below 10°C, preferably below 5°C, more preferably below 0°C. Else there is a high risk of problems during enrobing especially with respect to the bottom enrobing, when using conventional enrobing equipment. The mixture that is extruded preferably has a temperature of less than 15°C, especially between 10°C and -10°C. In a particulary preferred embodiment the pasteurized mixture is cooled to a temperature below 15°C, preferably of 10 to -5°C, then extruded and separated into portions while after the extrusion, before and/or after the separation into portions, further cooling is applied to freeze the mixture, and the frozen shaped portions of filling thus obtained are enrobed with a fluid fat-based coating material. Thus, the steps after the extrusion of freezing and separating into portions can be carried out in either order, or part of this freezing can be done before separating into portions and part of it afterwards. The temperature of the frozen portions which are then enrobed preferably is below -10°C, more preferably between -15° and -40°C, especially between -18°C and -35°C.

Extrudability of the mixture can be improved by addition of structuring agents such as locust bean gum (LBG), xanthan, guar gum, gelatin, agar, carrageenan, CMC and mixtures thereof. Separation into portions of the extruded strand can be done immediately upon extrusion at the mouth of the nozzle or it can be done later, e.g. after freezing the extruded strand.

Mouth feel of the resulting product can be substantially improved if a gas is incorporated in the filling up to an overrun of 100% and preferably of 10-50%. The keepability of the product can be improved if an inert gas is used and also if the processing of the filling proceeds in an inert gas atmosphere, suitably nitrogen. For realizing higher gas content processing conditions can be adapted and/or whipping agents (like egg white) and surfactants (like mono-glycerides) may be added as is well known in the food industry, e.g. when processing cream, ice creams and mousses. Gas content of food is usually expressed as overrun, defined as the percentage volume increase due to the incorporation of gas. It is important that protein based whipping agents are selected which when used are not in their iso electric point.

Mixing of the filling mixture need not be complete prior to the pasteurisation. Further mixing may be applied during pasteurisation or subsequently, up to the extrusion. For example, cooling of the pasteurized mixture can suitably be done using a scraped surface heat exchanger, which not only serves to cool the mixture but simultaneously mixes it. Preferably at least the last part of the mixing treatment is effected in an atmosphere of inert gas, in particular nitrogen. In a preferred embodiment inert atmosphere is applied such that the overrun of the resulting filling is caused by incorporation of inert gas, e.g. nitrogen.

The heat treated mixture, with or without gas incorporated into it, may be extruded alone, or, as mentioned above, filling ingredients may be incorporated between pasteurisation and extrusion, but such subsequent incorporation of filling ingredients is generally speaking not preferred. However, in a preferred embodiment, the mixture is extruded and is before, during or after extrusion combined with food ingredients selected from preserved fruit based material, crunches and fat based particles. Such ingredients like fruit purees, fruit particles, and pieces (chocolate flakes and crunches) may be mixed in with the filling, both homogeneously and in particulate distribution, or may alternatively be co-extruded with the filling for forming separate co-extruded strands or both. Fruit purees and pieces preferably have the same a_{w} as the filling or lower to prevent colour migration out of the fruit ingredients. Especially when using particles, combining them with the pasteurised mixture shortly before the extrusion rather than in the filling mixture has the advantage that undesired particle size reduction due to processing, can be minimized.

Particularly nice product can be obtained by coextruding the filling mixture with a fruit based material, e.g. fruit pulp, into separate layers. Thus the resulting snack product will contain inside the outer enrobing layer of e.g. chocolate, discrete layers of soft cheese based filling and fruit based material.

Preferably the filling and preferably also the filling mixture have a protein content of at least 8%, more preferably 8-20%, especially 9-15%. It is further preferred for the filling to comprise at least 10% soft cheese and/or soft cheese analogue. More preferably the content of this soft cheese and/or soft cheese analogue in the filling is 60-98%, especially 70-95%. Most preferably it is about 90%. It is particularly preferred to include all soft cheese and soft cheese analogue to be incorporated in the filling, via the filling mixture of step A of the process.

The expression "soft cheese" used in this specification and in the claims means cheese which is readily deformed by moderate pressure. Preferably the soft cheese is soft cheese according to the description given in the UK Cheese regulations of 1970. The water content of such cheese may not exceed 80%. The milk fat content may be practically 0, e.g. in the case of skimmed milk soft cheese, or may exceed 65% in the case of double cream cheese. It is particularly preferred for the soft cheese to be fresh cheese, i.e. cheese that has substantially not been matured and in which the casein coagulation has been caused primarily by acidification to a pH close to the isoelectric point, e.g. to a pH of 4.5-5.2, especially 4.5-4.9, rather than by the action of rennet. Acidification is preferably done by means of a culture to obtain an optimal taste and flavour. Small amounts of rennet are often used in the preparation of fresh cheese, but this rennet serves to obtain an improved texture rather than to make a substantial contribution to the coagulation of the casein.

Instead of or in addition to soft cheese, soft cheese analogue may be used in preparing the filling mixture. Whereas cheese is usually defined by the way it is produced and may include only specified ingredients, soft cheese analogue indicates materials that have similar properties as soft cheese but which may have been produced by a different process and/or which may include ingredients not legally allowed in products called cheese. For example, soft cheese like products in which part or all of the milkfat has been replaced with vegetable oil or fat can be used. Also products similar to soft cheese in taste and texture, in the preparation of which milk protein powders, e.g. whey powder or possibly some soya protein has been used, may be employed in the present invention. Preferably, the soft cheese analogue is material similar to soft cheese on the basis of acid casein. Thus, in such product, casein coagulated primarily by the action of acid, makes a substantial contribution to the product properties. Preferably, such material on the basis of acid casein resembles fresh cheese. If so desired, for example, as soft cheese analogue also product already including some non-milk sugar may be used.

The soft cheese or soft cheese analogue or combination of 2 or more soft cheeses and/or soft cheese analogues used in the preparation of the filling mixture preferably, overall, has the following protein, fat and dry matter contents:
- protein: 8-30%, more preferably 8.5-20%, most preferably 9-15%
- fat: 0-70%, more preferably 6-45%, most preferably 15-30%
- dry matter: at least 20%, more preferably 25-55% most preferably 30-50%

Preferably, of the soft cheese and/or soft cheese analogue used in filling, at least 50%, more preferably 70-100% is soft cheese, in particular fresh cheese containing only very small amounts of materials not originating from milk, e.g. less than 5%, preferably less than 3%.

Whereas the filling preferably comprises at least 50% soft cheese and/or soft cheese analogue, it may be advantageous to include in addition a small amount of hard cheese into the filling. For example, incorporation of small amounts of Gouda, Emmental, Stilton or Gorgonzola may make a beneficial contribution to the taste and flavour of the product. Instead of such hard cheese, e.g. processed cheese with the corresponding flavour profile can be used. Such materials, if used, are preferably included in step A of the process in the filling mixture prior to the pasteurisation.

Preferably the process is carried out such that the resulting snack product has a fat-based enrobing and a water-continuous filling, the filling comprising at least 50% soft cheese and/or soft cheese analogue and containing at least 8% protein, having a pH value of 4.0 to 4.8 and a total solutes level so that the water activity a_{w} ranges from 0.91 to 0.98, regardless of any constituents inhomogeneously distributed in the filling and fruit ingredients homogeneously distributed in the filling.

For limiting the sweetness and unwanted calories the filling preferably contains less than 25% non-milk mono and/or disaccharides and more preferably between 5 and 15%. Although the pH values of the filling may range between 3.7 and 5.0 the optimum as regards taste and keepability is found between 4.3 and 4.6. In practice the preferred solutes level will be controlled to a final a_{w} between 0.92 and 0.97 and in particular between 0.93 and 0.96. The filling mixture and thus the resulting filling also may contain optional additives such as structuring agents, stabilizers, foaming agents, preservatives, emulsifiers and flavours, and materials contributing e.g. fat and/or protein, e.g. cream, butterfat, soya protein isolate and the like, the balance being water. The fat content preferably is between 6 and 35% of the filling with optimal levels of 15-25%.

The fat and sugar levels in the filling have a big influence on the mouth feel and taste of the end product. Optimal results are achieved with a filling (not taking into account the effects of including particles such as fruit particles, crunches or chocolate chips, or other fruit based material such as fruit paste or puree on the composition of the filling) having a fat level between 15-25%, a moisture level between 45 and 70% and an added carbohydrate level preferably non-milk mono and/or disaccharides between 5 and 15%.

The fat based coating material with which the product is enrobed preferably is chocolate, e.g. white, milk or bitter chocolate, or chocolate like material in which e.g. part or all of the cocoabutter and/or milkfat is replaced with other fat. Such materials are well known in the art. Other fat based coating materials e.g. fruit or yoghurt flavoured coating can be used as well, but chocolate and chocolate like coatings are preferred. Whichever fat based coating material is employed, preferably it is substantially free of moisture. The moisture content of the coating material preferably is less than 2%, more preferably 0-1%.

By enrobing is meant applying fluid fat based coating material onto a shaped portion of filling. Enrobing is opposed to injection moulding wherein first an outer shell of coating material is formed, filling composition is injected into it and the shell is closed by applying a "lid" of coating material onto the injected filling material. Enrobing can be done e.g. by spraying fluid coating material onto the shaped portion of filling or by dipping the shaped portion of filling into fluid coating material. Preferably enrobing is done by curtain coating which encompasses top and bottom enrobing. Such enrobing techniques are commonly applied in the confectionery industry. Enrobing can be done by applying a single layer of fluid fat based coating material. Alternatively, 2 or more layers may be applied. If more than 1 layer is applied, if so desired, for the different layers different compositions can be used. In between the filling and the coating, a moisture barrier can be applied, e.g. using beeswax or another suitable material.

The fat based enrobing preferably constitutes 4-35%, more preferably 6-25%, especially 7-20% of the snack product. The moisture barrier, if applied, preferably constitutes less than 10%, especially 2-6% of the end of the product. The balance of the product preferably consists of filling, optionally in combination with fruit based ingredients such as fruit puree or paste, fruit particles in a preserved form, and/or other particles such as crunches, chocolate chips, pieces of nuts. If such fruit based ingredients and/or particles are used, their amount relative to the amount of filling preferably is between 1:20 and 1:1, more preferably from 1:10 to 1:2.

The invention will be elucidated in the following examples of some embodiments thereof. Parts, proportions and percentages refer to weights, unless otherwise indicated, except for gas contents, which relate to volumes.

### Example 1:

| **Ingredients of filling mixture** | Ex. 1A | Ex. 1B | Ex. 1C | Ex. 1D | Ex. 1E | Ex. 1F |
|---|---|---|---|---|---|---|
| Skimmed Soft Cheese | 45 | 14 | 79 | 40.2 | 53.7 | 60.3 |
| Cream soft cheese (44 % Fat abs.) | 45 | 76 | 11 | 40.2 | 26.8 | 20.1 |
| Saccharose | 9 | 9 | 9 | 0 | 0 | 0 |
| Glucose | 0 | 0 | 0 | 9 | 9 | 9 |
| Flavour | 0.5 | 0.5 | 0.5 | 0.3 | 0.3 | 0,3 |
| Locust Bean Gum | 0.5 | 0.5 | 0.5 | 0.3 | 0.3 | 0.3 |
| Strawberry puree | 0 | 0 | 0 | 10 | 10 | 10 |
| | | | | | | |

| **Analysis** | 1A | 1B | 1C | 1D | 1E | 1F |
|---|---|---|---|---|---|---|
| Water | 56.2 | 46.3 | 67.1 | 58.5 | 62.7 | 65.0 |
| Protein | 10.3 | 8.2 | 12.7 | 9.3 | 10.2 | 10.7 |
| Fat | 19.8 | 33.4 | 4.9 | 17.7 | 11.8 | 8.9 |
| Carbohydrates | 11.2 | 10.3 | 12.1 | 12.5 | 12.9 | 13.0 |
| pH | 4.5 | 4.5 | 4.5 | 4.3 | 4.3 | 4.3 |
| a_{w} | 0.97 | 0.97 | 0.97 | 0.965 | 0.965 | 0.965 |
| Cal/100 g | 272 | 381 | 153 | 253 | 205 | 182 |

Processing was in all examples 1A-1F the same: The ingredients were mixed and heated up to 78°C at low shear conditions. Subsequently the mixtures were cooled down to -2°C in a scraped surface heat exchanger into which N₂ was fed. By controlling the dasher speed and the throughput rate of the SSHE (Crepaco W104 with closed (series 80) dasher, 240 rpm dasher speed and throughput rate of 300 kg/hr) products with an overrun of about 20% were obtained.

The resulting whipped products were extruded into a strand having a 1x2 cm cross-section onto a running belt, blast frozen to -30°C and cut into portions of 8 cm length. These portions were enrobed by curtain coating in molten white chocolate. After the chocolate had solidified, the products were packed and stored at 5°C. Product 1A was preferred over products 1B and 1C. Product 1B had a hard texture and product 1C tasted slightly acidic and the texture was soft. Product 1D was preferred over product 1E and 1F. Product 1F was found to be acidic. Using glucose instead of sucrose (1D-1F) gave also very good products, with a slightly lower a_{w}.

### Comparison

Example 1 A was repeated except that the pasteurised mixture was cooled to 20°C prior to extrusion and that no further cooling was applied before enrobing. The shape of the extruded strand was much less good and cutting the strand into portions was very difficult. Proper enrobing could not be achieved using a conventional enrober. The product fell through the gaps between the support rods for the bottom enrobing.

### Example 2:

| Ingredients of filling mixture | Ex. 2A | Ex. 2B | Ex. 2C | Ex. 2D | Ex. 2E |
|---|---|---|---|---|---|
| Skimmed Soft Cheese | 38 | 45 | 46 | 47 | 48.5 |
| Cream soft cheese (44 % Fat abs.) | 38 | 45 | 46 | 47 | 48.5 |
| Saccharose | 9 | 9 | 7 | 5 | 2 |
| Glucose | 9 | 0 | 0 | 0 | 0 |
| Flavour | 0.5 | 0.5 | 0.5 | 0.5 | 0.5 |
| Locust Bean Gum | 0.5 | 0.5 | 0.5 | 0.5 | 0.5 |

| Analysis: | | | | | |
|---|---|---|---|---|---|
| Water | 48.3 | 56 | 57 | 58 | 60 |
| Protein | 8.7 | 10.3 | 10.6 | 10.8 | 11.0 |
| Fat | 16.7 | 19.8 | 20.3 | 20.7 | 21.4 |
| Carbohydrates | 24.1 | 11.2 | 9.3 | 7.5 | 4.7 |
| pH | 4.5 | 4.5 | 4.5 | 4.5 | 4.5 |
| a_{w} | 0.95 | 0.97 | 0.97 | 0.975 | 0.98 |
| Cal/100 g | 289 | 272 | 370 | 268 | 264 |

Processing conditions and the coating applied were similar as described in example 1.
Products 2B were preferred over products 2C-2E. Product 2A was found to be rather sweet in taste and the texture was getting soft.

From trials done with a similar composition as 2B using similar processing it was seen that the overrun could be increased from 20 to 60% by addition of 1% egg white to composition 2B (product throughput rate of 225 kg/hr).

### Example 3:

Processing conditions and composition of the filling were as described in example 1A. At the point of extrusion the viscosity of the filling was 40 Pas, and this filling was co-extruded with strawberry puree which had a viscosity of 40 Pas, in relative amounts of 3:1. After extruding the products were frozen, cut, enrobed and gas packed in PET/PE film having an oxygen barrier coating and nitrogen flushed. Products were then packed in corrugated card board boxes. Products were stored frozen and distributed chilled. Products produced (co-extruded and non-co-extruded) had an excellent texture (smooth and a moist fresh mouth feel), had a nice overrun (20-25%) and were physically and microbiologically stable for more than 6 weeks at refrigeration temperatures.

## Claims

1. Process for preparing an enrobed snack product having a fat-based enrobing and a water-continuous filling comprising:
A. mixing soft cheese and/or soft cheese analogue with food grade materials to obtain a filling mixture,
B. pasteurising the mixture,
C. subjecting the pasteurised mixture to cooling to below 10°C, extruding and separating into portions to obtain shaped portions of fillings,
D. enrobing the shaped portions of filling with a fluid fat based coating material.
wherein the filling has a water activity of 0.91-0.98 and a pH of 3.7-5.0, preferably 4.0-4.8.

2. Process according to claim 1 wherein the filling comprises at least 50% soft cheese and/or soft cheese analogue.

3. Process according to claim 1 or claim 2 wherein the filling contains at least 8% protein.

4. Process according to claims 1-3 wherein in step C after extrusion, the mixture is frozen and separated into portions.

5. Process according to claims 1-4 wherein the mixture is extruded and is before, during or after extrusion combined with food ingredients selected from preserved fruit based material, crunches and fat based particles.

6. Process according to claim 5 wherein the mixture is coextruded with a fruit based material into separate layers.

7. Process according to claims 1-6 wherein the pasteurisation is done at a temperature not exceeding 95°C, preferably of 65-85°C.

8. Process according to claims 1-7 wherein gas is incorporated in the filling mixture to obtain an overrun of the filling of up to 100% , preferably 10-50%.

9. Process according to claims 1-8 wherein the filling contains less than 25% preferably 5-15%, non-milk mono- and/or disaccharides.

10. Process according to claims 1-9 wherein the filling has a fat content of 6-35%, preferably 15-25%.

11. Enrobed snack product having a fatbased enrobing and a water continuous filling obtainable by the process of any one of claims 1-10, that is physically and microbiologically stable for at least 3 weeks, preferably at least 1 month at refrigerated temperatures.
